# EUROPEAN PATENT APPLICATION

(11) **EP 2 532 627 A1**
(43) Date of publication of application: **12.12.2012**
(21) Application number: 12170812.7
(22) Date of filing: 05.06.2012
(51) Int. Cl.: C03B 37/012, C03B 37/07

(54) **Apparatus and method for making an optical fiber preform**

(30) Priority: 07.06.2011 JP 2011127577
(71) Applicant: Sumitomo Electric Industries, Ltd., Osaka-shi, Osaka 541-0041 (JP)
(72) Inventor: Nakanishi, Tetsuya, Kanagawa (JP)
(74) Representative: HOFFMANN EITLE

(57) **Abstract**

Apparatus and methods for making an optical fiber preform at low cost avoiding the apparatus from being damaged are provided. Apparatus 1 for making an optical fiber preform by depositing glass particles 3 on the circumferential surface of a glass rod 2 comprises: a chamber 10, a plasma torch 11, a glass particle supplying part 12, a composition modification gas supplying part 13, and an exhaust part 14. The chamber 10 surrounds the heating portion of the glass rod 2 heated by the plasma torch 11. The plasma torch 11 heats the glass particles 3 by a plasma flame. The glass particle supplying part 12 introduces glass particles 3 towards the heating portion of the glass rod 2 in the chamber 10. The composition modification gas supplying part 13 introduces composition modification gas into the chamber 10 in order to modify the composition of the glass particles 3 to be deposited on the heating portion of the glass rod 2 in the chamber 10.

## Description

### BACKGROUND OF THE INVENTION

### Field of the Invention

The present invention relates to apparatus and methods for making an optical fiber preform.

### Description of the Background Art

An optical fiber is manufactured by drawing an optical fiber preform into a fiber. The optical fiber preform is produced by preparing a glass rod including a core and an optical cladding and subsequently forming a jacket layer on the circumference of the glass rod.

Japanese Patent Application Publication H10-324537 (Patent literature 1) describes a method of forming a jacket layer by depositing glass particles on the circumferential surface of a glass rod. According to the method, the glass particles are fed by a blowing technique and then heated by a plasma torch so as to be deposited. The method is hereinafter called the "plasma-blowing method." Also, Patent literature 1 describes modifying the refractive index of the glass particles deposited on the circumferential surface of the glass rod by blowing a halogen gas and glass particles altogether onto the circumferential surface of a glass rod. Generally, the halogen gas is corrosive, and accordingly this method is difficult to carry out while preventing production equipment from being damaged.

US Patent application publication No.2005-0262876 (Patent literature 2) describes a method of forming a jacket layer in such a manner as follows: the plasma-blowing method is performed while blowing glass particles containing a predetermined quantity of dopant onto the circumferential surface of a glass rod, and thereby glass particles having an intended refractive index are deposited on the circumferential surface of the glass rod. The method will not have a problem of damaging production equipment, but it will be difficult to manufacture a low-cost optical fiber preform or optical fiber since such refractive index-adjusted glass particles are expensive.

### SUMMARY OF THE INVENTION

The object of the present invention is to provide apparatus and methods for making an optical fiber preform at low cost while avoiding the apparatus from being damaged as mentioned above.

An apparatus of the present invention for making an optical fiber preform, which is equipment for producing an optical fiber preform by depositing glass particles on the circumferential surface of a glass rod, comprises: (1) a plasma torch for heating glass particles by a plasma flame; (2) a chamber surrounding the heating portion of a glass rod to be heated by the plasma torch; (3) a supplying part provided separately from the plasma torch and used for supplying glass particles toward the heating portion of the glass rod in the chamber as well as for feeding a composition modification gas into the chamber, whereas the composition modification gas is used for modifying the composition of the glass particles to be deposited on the heating portion of the glass rod in the chamber; (4) an exhaust part for causing negative pressure inside the chamber by exhaustion; and (5) a movement mechanism for moving the plasma torch, the chamber, the supplying part, and the exhaust part relatively in a direction parallel to the axis of the glass rod.

In one embodiment, the apparatus of the present invention for making an optical fiber preform may be designed such that the supplying part feeds a mixture of glass particles and composition modification gas to the chamber. Or in another embodiment, the supplying part may comprise (a) a first supplying part for feeding glass particles to the chamber and (b) a second supplying part which is provided separately from the first supplying part and is used for feeding the composition modification gas to the chamber.

In the apparatus of the present invention for making an optical fiber preform, a coil for generating plasma of the plasma torch is preferably provided outside the chamber. Also, of parts constituting the plasma torch, those lying inside the chamber are preferably made of or covered with a nonconductive material capable of resisting against corrosion caused by halogen gas.

Preferably, the apparatus of the present invention for making an optical fiber preform further comprises a temperature monitor for monitoring the surface temperature of the heating portion of a glass rod in the chamber or the surface temperature of a glass layer formed. It is also preferable that the apparatus of the present invention further comprise a diameter monitor for monitoring the outer diameter of the heating portion of a glass rod in the chamber or the outer diameter of the glass layer formed. Preferably, the apparatus of the present invention further comprises a glass-particle monitor for monitoring the size and the flow rate of glass particles which are supplied to the chamber from the supplying part. In this case, preferably the apparatus of the present invention further comprises a control unit for adjusting the amount of glass-particles supplied from the supplying part to the chamber, whereas such adjustment may be done on the basis of either one or both of the particle size and the flow rate which are monitored by the glass-particle monitor.

The method of the present invention for making an optical fiber preform includes supplying glass particles and composition modification gas from a supplying part provided separately from a plasma torch toward a heating portion of a glass rod in a chamber, exhausting an inside the chamber to be a negative pressure through an exhaust part, moving the plasma torch, the chamber, the supplying part, and the exhaust part relatively in a direction parallel to the axis of the glass rod, and heating the glass particles with a plasma flame of the plasma torch and depositing the glass particles on a circumferential surface of the glass rod such that the composition modification gas modifies the composition of the glass particles.

In the method of the present invention for manufacturing an optical fiber preform, the composition modification gas may be either a gas including a dopant for lowering the refractive index of glass particles or a gas including a dopant for increasing the refractive index of glass particles. The gas including a dopant for lowering the refractive index of glass particles may be a gas including fluorine or boron. The composition modification gas may be a gas including a halogen element.

According to the present invention, it is possible to manufacture an optical fiber preform at low cost, avoiding damage to production equipment.

### BRIEF DESCRIPTION OF DRAWING

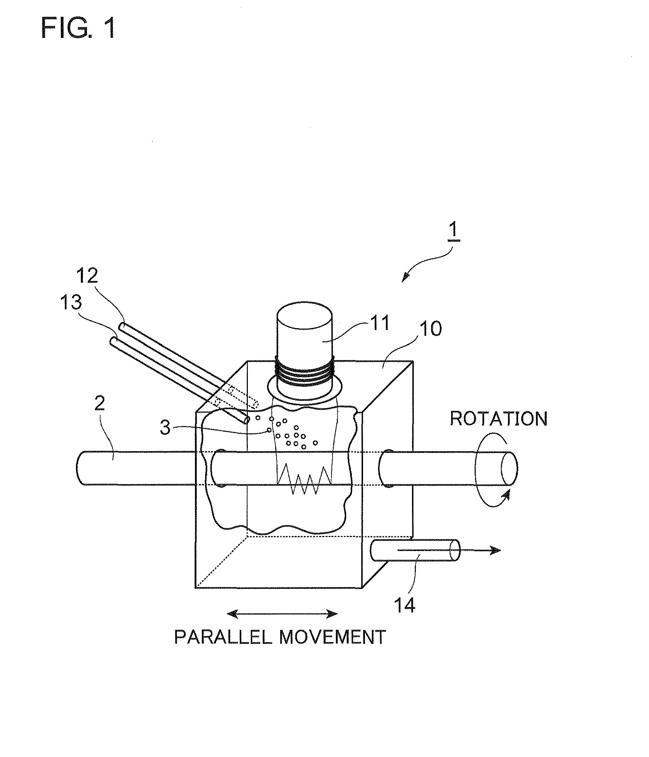

Figure 1 is a conceptional schematic diagram showing an embodiment of the present invention, which is an apparatus for making an optical fiber preform.

### DETAILED DESCRIPTION OF THE INVENTION

Hereinafter, preferred embodiments of the present invention will be described in detail with reference to the accompanying drawing. In the drawing, an identical mark represents the same element and the repetition of explanation is omitted.

Figure 1 is a conceptional schematic diagram showing an embodiment of the present invention, which is an apparatus for making an optical fiber preform. The apparatus 1 for making an optical fiber preform, which is equipment for producing an optical fiber preform by depositing glass particles 3 on the circumferential surface of a glass rod 2, comprises: a chamber 10, a plasma torch 11, a glass particle supplying part (a first supplying part) 12, a composition modification gas supplying part (a second supplying part) 13, and an exhaust part 14. In Fig. 1, illustration of some portion of the chamber 10 is omitted so as to show the inside of the chamber 10.

A glass rod 2, which is made of silica glass as a main component and formed in a substantially cylindrical form by a vapor deposition method, such as VAD, OVD, MCVD, or PCVD, has at least a region used as a core for guiding light. The glass rod 2 may also have a cladding region enclosing the core region. In this embodiment, an optical fiber preform is made by forming a jacket layer on the circumferential surface of the glass rod 2.

Prior to forming a jacket layer according to this embodiment, an optical cladding region may be formed on the circumferential surface of the glass rod 2 by VAD, OVD, MCVD, Rod-in-collapse method, or other similar methods. Also, in order to remove impurities existing on the surface of the glass rod 2, it is preferable to fire polish the surface of the glass rod 2 by an oxy-hydrogen or plasma torch before forming a jacket layer according to this embodiment. Or otherwise, it is also preferable to remove a surface layer by hydrogen fluoride instead of fire polishing.

Glass rod 2 is set on a horizontal or vertical lathe. In such case, a support glass rod is connected to each end of the glass rod 2, and the support glass rods are held by the lathe. The lathe can rotate the glass rod 2 about the axis of the glass rod 2.

Apparatus 1 produces an optical fiber preform by depositing glass particles 3 on the circumferential surface of a glass rod 2 set on the lathe in the above-mentioned manner. The chamber 10 surrounding the heating portion of the glass rod 2 heated by the plasma torch 11 prevents a composition modification gas from leaking from around the non-heating portion. Apparatus 1 has a movement mechanism for relatively moving the chamber 10, the plasma torch 11, the first supplying part 12, the second supplying part 13, and the exhaust part 14 as one unit in a direction parallel to the axis of the glass rod 2.

Plasma torch 11 heats the glass particles 3 by a plasma flame. The nozzle of the plasma torch 11 for jetting a plasma flame is arranged such that the plasma flame reaches the heating portion of the glass rod 2 enclosed by the chamber 10. For igniting the plasma torch 11, if a conductive substance such as carbon is introduced into a region enclosed with a coil surrounding the plasma torch 11 while applying a high frequency voltage to the coil, then plasma will be ignited by the conductive substance which is induction heated. In the case of such ignition, impurities might easily disperse, and therefore it is advisable that the ignition be done at a position where the nozzle of the plasma torch 11 does not face the glass rod 2. For example, it is desirable to shift the plasma torch 11 to the position of a support glass rod at the time of ignition.

In a case where a gap exists between the plasma torch 11 and the chamber 10, a mechanism for sealing the gap with an inert gas may be provided. This will enable preventing a glass-composition modification gas from leaking out of the chamber 10 and preventing the plasma torch 11 from being eroded by the gas. The coil for generating plasma of the plasma torch 11 is preferably provided outside the chamber 10. Of the parts constituting the plasma torch 11, those existing inside the chamber 10 are preferably made of or covered with a nonconductive material which is corrosion resistant against halogen gas. This will enable avoiding degradation of the plasma torch 11 such as corrosion.

First supplying part 12, which is provided separately from the plasma torch 11, introduces glass particles (silica particles) 3 towards the heating portion of a glass rod 2 in the chamber 10. The nozzle of the first supplying part 12 is arranged inside the chamber 10. The nozzle of the first supplying part 12 faces the glass rod 2 and is adjusted so that the glass particles 3 which have been jetted out may be heated by the plasma flame so as to adhere to the glass rod 2. Preferably the nozzle of the first supplying part 12 have a mechanism for moving in accordance with the deposition of the glass particles 3 on the circumferential surface of the glass rod 2. The jetting-out of the glass particles 3 is performed using a carrier gas for carrying the glass particles 3. The desirable carrier gases are N₂ and O₂. Although a rare gas may also be used, it will be necessary to pay attention with respect to possible damage to the plasma torch 11 and sparks, since the rare gas tends to ionize.

The second supplying part 13 introduces a composition modification gas into the chamber 10 in order to modify the composition of glass particles 3 to be deposited on the heating portion of the glass rod 2 in the chamber 10. The gas nozzle of the second supplying part 13 is arranged inside the chamber 10. The gas nozzle of the second supplying part 13 substantially faces the glass rod 2 and is adjusted so that the jetted-out gas may react with glass particles 3 heated by the plasma flame. The gas nozzle of the second supplying part 13 is preferably equipped with a mechanism for moving in accordance with the deposition of glass particles 3 on the circumferential surface of the glass rod 2.

The composition modification gas may be either a dopant gas for lowering the refractive index of glass particles, or a dopant gas for raising the refractive index of glass particles. In either case, low-cost production of an optical fiber preform having desired refractive-index profile will be possible. A gas containing fluorine or boron can be used as the dopant gas for lowering the refractive index of glass particles. Using the gas which contains fluorine or boron enables reducing the refractive index of synthesized glass, and hence pure-silica-core fibers can be produced at low cost.

Gas which contains a halogen element is suitable for use as a composition modification gas. Halogen, which is easy to react with glass and hence suitable for introducing as a dopant, can preferably be used for controlling a refractive index. Examples of gases that can be used as a halogen-containing gas include SiF₄, CF₄, CHF, SF₆, and C₂F₆. Since a gas arising from decomposition of SF₆ and fluorocarbon tends to corrode the plasma torch 11 that is made of glass, it is desirable that the nozzle of the plasma torch 11 with which the corrosive gas touches be coated with a protective film having no electrical conductivity.

The first supplying part 12 and the second supplying part 13 may be provided either separately from each other or as a common supplying part. In the case of such common supplying part, glass particles and composition modification gas are introduced as a mixture into the chamber 10. Providing the common supplying part enables simplification of equipment composition.

The exhaust part 14 connected to the chamber 10 exhausts the inside of the chamber 10 so as to cause a negative pressure therein. It is desirable to install a pressure gauge for measuring pressure in the chamber 10 and to provide a mechanism for controlling the exhaust pressure so that the pressure thus measured may become a predetermined value. It is desirable that the exhaust part 14 be arranged at a position which will not obstruct stability of a plasma flame nor deposition of glass particles 3 onto the glass rod 2.

By using the apparatus 1 for making an optical fiber preform, glass particles 3 are introduced from the first supplying part 12 towards the heating portion of the glass rod 2 in the chamber 10. Simultaneously, a composition modification gas is introduced into the chamber 10 by the second supplying part 13, and the inside of the chamber 10 is exhausted through the exhaust part 14 so as to cause a negative pressure therein. The glass particles 3 which are blown onto the circumferential surface of the glass rod 2 are heated by the plasma flame of the plasma torch 11 and deposited on the circumferential surface of the glass rod 2, whereas the composition is modified by the composition modification gas. The chamber 10, the plasma torch 11, the first supplying part 12, the second supplying part 13, and the exhaust part 14 relatively traverse as one unit in a direction parallel to the axis of the glass rod 2. Also, the glass rod 2 rotates around its axis. Thus, the jacket layer of an optical fiber preform is formed by carrying out the blowing and deposition of glass particles 3 until a desired thickness of glass layer is obtained.

According to this embodiment, it is possible to avoid damage to production equipment by using the chamber 10 for preventing the composition modification gas such as halogen gas from spreading beyond a required part, and consequently an optical fiber preform with a desired refractive-index profile can be manufactured at low cost. Also, the space is limited by providing the chamber 10, and consequently it is possible to reduce the amount of the composition modification gas to be used.

In the process of forming a jacket layer, it is desirable to monitor surface temperature of the heating portion of the glass rod 2 or that of a formed glass layer by a temperature monitor. In order to obtain a desired temperature, the temperature of the glass rod 2 or the surface of a formed glass layer under processing is measured, and based on the temperature thus measured, the flow rate of gas fed into the plasma torch 11 and electric power applied to the coil of the plasma torch 11 can be adjusted. Consequently, it is possible to prevent glass particles 3 from being insufficiently consolidated due to shortage of heating. It is also possible to prevent the glass rod 2 from being deformed as a result of overheating.

In the process of forming a jacket layer, preferably the outer diameter of a heating portion of the glass rod 2 or that of a glass layer formed is monitored by a diameter monitor. A laser diameter monitor (e.g., Keyence LS-5000), a CCD monitor (Keyence XG-8000), or like can suitably be used as the diameter monitor. However, any type of monitor can be used, provided that it is capable of measuring the outer diameter of glass from a substantially remote position. On the basis of diameters thus measured, the number of deposited glass layers can be controlled, whereby the thickness of a jacket layer or the diameter of an optical fiber preform can be controlled to a desired value.

Using a CCD monitor is particularly desirable since it enables not only measuring an outer diameter, but also monitoring the existence of an unsuitable optical characteristics and mechanical characteristics of an optical fiber, such as bubbles generated in a formed glass layer. In the case of adopting the CCD monitor, preferably the quantity of light that enters into a CCD camera is reduced or dynamically adjusted by means of an iris diaphragm or ND filter, because an image in the visual range will otherwise become too bright due to a plasma flame.

In the process of forming a jacket layer, it is also preferable to use a glass-particle monitor for monitoring the size and flow rate of glass particles 3 which are introduced into the chamber 10 from the first supplying part 12. In such case, preferably the amount of the glass particles 3 introduced from the first supplying part 12 into the chamber 10 is adjusted according to the particle size and/or the flow rate of particles thus monitored by the glass-particle monitor part. This enables manufacturing easily an optical fiber preform with a desired outer diameter and refractive-index profile.

The refractive-index profile of an optical fiber preform thus produced is inspected with a preform analyzer. Consequently, an optical fiber preform which is judged to be acceptable by the inspection is held in a fiber-drawing tower, and the lower end portion of the fiber preform is heated to a temperature above the working point, so that the softened portion is processed into a fiber by drawing appropriately. While the diameter of an optical fiber thus prepared is being controlled, the optical fiber passes through a die so as to be coated with resin and through a UV irradiation unit for curing the resin, so that a resin-coated fiber strand is made, and subsequently the resin-coated fiber strand is wound up onto a bobbin.

Generally, two or more coating layers are provided around the circumference of an optical fiber: a primary coating layer for avoiding the fiber from suffering from direct transmission of an external force; and a secondary coating layer for protection against external damage. The dies for applying each resin coating for such layers may be arranged in series in a fiber drawing process. Or, two layers may be applied simultaneously with one die. In the latter case, the height of a fiber-drawing tower can be made lower, and accordingly reduction in the construction cost of a fiber-drawing building is possible.

In the case where equipment for controlling the cooling rate of a glass fiber just made upon fiber-drawing is provided between a fiber-drawing furnace and a die, the surface temperature of a bare fiber entering into the die can be controlled to a suitable temperature by the equipment. The lower the Reynolds number of a gas flowing in the equipment for controlling the cooling rate, the more desirable, because it is possible to reduce accordingly the oscillation that might be caused to the fiber by turbulent flow of the gas. Moreover, lessening the cooling rate of a glass fiber enables reducing the Rayleigh scattering, and consequently an optical fiber having lower transmission loss can be obtained.

The UV irradiation unit for curing a resin can appropriately control the cure rate of the resin by performing feedback control of its inside temperature as well as UV light intensity. A magnetron and an ultraviolet LED are preferably used for the UV irradiation unit. In the case of the ultraviolet LED, the light source itself does not generate heat; therefore, a mechanism is separately provided for introducing warm air so that the suitable inside temperature of the UV irradiation unit may be maintained. The power of UV light which reaches a coating layer changes during the fiber drawing process as components which part from resin adhere to the inner wall face of the center tube of the UV irradiation unit. Therefore, it may be advisable to monitor the reduction degree of UV light power beforehand during the fiber drawing process and to adjust the UV light power depending on fiber-drawing time so that the power of UV light irradiated to the coating layer may become constant. Moreover, it might be advisable to monitor the UV light which leaks out from the center tube of the UV irradiation unit and to make a control so that the UV light power irradiated to the coating layer become constant. This will enable obtaining a constant breaking strength throughout the entire length of the optical fiber.

Preferably, the thickness of the secondary coating layer of the two coating layers is designed to be suitable in consideration of external damage. Generally, the thickness of the secondary coating layer is preferably not less than 10 µm, and more preferably not less than 20 µm. The coated optical fiber strand thus prepared and wound onto a take-up bobbin, with its coating layer being colored if necessary, is used for an end product such as an optical cable or an optical cord.

Examples of manufacturing optical fiber preforms according to this embodiment will be described below. The conditions described in the following examples are exemplary and can be modified according to required glass composition, deposition rate, preform size, etc.

### Examples 1 to 5

A jacket layer was formed on the circumferential surface of a glass rod 2 in the chamber 10 by blowing glass particles 3 from the first supplying part 12 while such circumferential surface of the glass rod 2 is being heated. (In Example 5, glass particles 3 used were those which had been held in a Cl₂ atmosphere beforehand to remove absorptive water existing on their surfaces.) In such process, the flow rate of gas fed into the plasma torch 11 and the electric power applied to the coil of the plasma torch 11 were controlled by measuring the surface temperature of the heated glass rod 2 by means of a radiation thermometer so that the surface temperature of the formed glass layer might become a predetermined temperature. Also, a composition modification gas was introduced into the chamber 10 from the second supplying part 13. The plasma torch 11, the first supplying part 12, the second supplying part 13, the exhaust part 14, and the chamber 10 were subjected to two-way movement as one unit at plurality of times along the axis of the glass rod 2. Thus, fluoride was added to the glass layer, and thereby a jacket layer having a reduced refractive index was obtained.

In Examples 1 and 2, the diameter of a formed glass layer was constantly measured with a CCD monitor, and the amount of introduced glass particles 3 was adjusted with respect to the last ten traverses so that a predetermined diameter might be obtained along the longitudinal direction. In Examples 3, 4, and 5, the outer diameter of a formed glass layer was constantly measured with the CCD monitor, and the amount of introduced glass particles 3 was adjusted so that each layer might have a predetermined outer diameter. Thus, optical fiber preforms having a predetermined diameter were prepared.

With respect to each of the above-mentioned examples, the following table shows the diameter and length of glass rod 2, the capacity of chamber 10, the average particle size of glass particles, the supplied quantity of glass particles, the control value of the surface temperature of glass layer, the composition and flow rate of composition modification gas, the speed of two-way movement, and the final diameter of optical fiber preform.

**Table**

| Example | | | | 1 | 2 | 3 | 4 | 5 |
|---|---|---|---|---|---|---|---|---|
| Glass rod | | Diameter | mm | 50 | 45 | 42 | 42 | 42 |
| | | Length | mm | 2000 | 3000 | 2000 | 2000 | 2000 |
| Capacity | | | liter | 1200 | 1200 | 800 | 500 | 500 |
| Glass particles | Average diameter | | nm | 86 | 86 | 86 | 86 | 86 |
| | Supplied quantity | | g/min | 20 | 32 | 25 | 25 | 25 |
| Surface temperature | | | °C | 1850 | 1780 | 1850 | 2000 | 1900 |
| Composition modification gas | | Composition | | SiF₄ | SiF₄ | SiF₄ | SiF₄ | CF₄ |
| | | Flow rate | cc/min | 200 | 400 | 100 | 60 | 60 |
| Speed of two-way movement | | | mm/min | 100 | 60 | 100 | 200 | 200 |
| Final diameter | | | mm | 156 | 141 | 131 | 131 | 131 |

In Example 2, by reducing the speed of the two-way movement and the surface temperature concurrently, it was made possible to prevent deformation due to warping-down (bending) even in a case of comparatively long glass rod. In Example 4, the capacity of the chamber 10 was 500 liters, and as a result, a ratio of an amount of fluorine added to the glass layer to an amount of fluorine in the supplied composition modification gas was improved by about 25% as compared with a case where the capacity of the chamber 10 was 1000 liters.

## Claims

1. An apparatus for making an optical fiber preform by depositing glass particles on the circumferential surface of a glass rod, comprising:
a plasma torch for heating glass particles by a plasma flame;
a chamber surrounding the heating portion of a glass rod to be heated by the plasma torch;
a supplying part provided separately from the plasma torch and used for supplying glass particles toward the heating portion of the glass rod in the chamber as well as for feeding a composition modification gas into the chamber, whereas the composition modification gas is used for modifying the composition of the glass particles to be deposited on the heating portion of the glass rod in the chamber;
an exhaust part for causing negative pressure inside the chamber by exhaustion;
and
a movement mechanism for moving the plasma torch, the chamber, the supplying part, and the exhaust part relatively in a direction parallel to the axis of the glass rod.

2. An apparatus for making an optical fiber preform according to claim 1,
wherein
the supplying part feeds a mixture of glass particles and composition modification gas to the chamber.

3. An apparatus for making an optical fiber preform according to claim 1,
wherein
the supplying part comprises:
a first supplying part for feeding glass particles to the chamber; and
a second supplying part which is provided separately from the first supplying part and is used for feeding the composition modification gas to the chamber.

4. An apparatus for making an optical fiber preform according to any of claims 1 to 3, wherein
a coil for generating plasma of the plasma torch is provided outside the chamber.

5. An apparatus for making an optical fiber preform according to any of claims 1 to 4, wherein
of parts constituting the plasma torch, those provided inside the chamber are made of or covered with a nonconductive material capable of resisting against corrosion caused by halogen gas.

6. An apparatus for making an optical fiber preform according to any of claims 1 to 5,
further comprising a temperature monitor for monitoring the surface temperature of the heating portion of a glass rod in the chamber or the surface temperature of a glass layer formed.

7. An apparatus for making an optical fiber preform according to any of claims 1 to 6,
further comprising a diameter monitor for monitoring the outer diameter of the heating portion of a glass rod in the chamber or the outer diameter of the glass layer formed.

8. An apparatus for making an optical fiber preform according to any of claims 1 to 7,
further comprising a glass-particle monitor for monitoring the size and the flow rate of glass particles supplied to the chamber from the supplying part.

9. An apparatus for making an optical fiber preform according to claim 8,
further comprising a control unit for adjusting the amount of glass-particles supplied from the supplying part to the chamber, said adjustment being done on the basis of either one or both of the particle size and flow rate monitored by the glass-particle monitor.

10. A method of making an optical fiber preform, the method comprising:
supplying glass particles and composition modification gas toward a heating portion of a glass rod in a chamber from a supplying part provided separately from a plasma torch the composition modification gas being used for modifying a composition of the glass particles to be deposited on the heating portion of the glass rod;
exhausting an inside of the chamber through an exhaust part so as to cause a negative pressure inside the chamber;
moving the plasma torch, the chamber, the supplying part, and the exhaust part relatively in a direction parallel to an axis of the glass rod; and
heating the glass particles with a plasma flame of the plasma torch and depositing the glass particles on a circumferential surface of the glass rod.

11. A method of making an optical fiber preform according to claim 10, wherein the composition modification gas includes a dopant for increasing the refractive index of glass particles.

12. A method of making an optical fiber preform according to claim 10, wherein the composition modification gas decreases the refractive index of glass particles.

13. A method of making an optical fiber preform according to claim 12, wherein the composition modification gas includes fluorine or boron.

14. A method of making an optical fiber preform according to any one of claims 10 to 12, wherein
the composition modification gas includes a halogen element.
